# EUROPEAN PATENT APPLICATION

(11) **EP 0 570 754 A1**
(43) Date of publication of application: **24.11.1993**
(21) Application number: 93107188.0
(22) Date of filing: 04.05.1993
(51) Int. Cl.: H02J 7/14, F02B 63/04

(54) **An electrical generator system for motor vehicles, including an alternator and a hydraulic motor**

(30) Priority: 20.05.1992 IT TO920435
(71) Applicant: INDUSTRIE MAGNETI MARELLI S.p.A., I-20145 Milano (IT)
(72) Inventor: Fasola, Giancarlo, I-20145 Milano (IT)
(74) Representative: Quinterno, Giuseppe

(57) **Abstract**

The system includes an alternator (2) with permanent-magnet excitation, having an output rectifier (3). A hydraulic motor is coupled to the shaft of the alternator (2) and consists, for example, of a turbine (5) associated with a regulator device (6). A pump (7) driven by the internal combustion engine (1) causes fluid to flow from a reservoir (8) to the turbine (5) through a delivery pipe (10). An electronic control unit (ECU) connected to the output of the alternator (2) and to the regulator associated with the turbine (5) regulates the voltage delivered by the alternator, by modifying the rate of rotation of the turbine (5), by means of the regulator.

## Description

The present invention relates to an electrical generator system for a motor vehicle with an internal combustion engine, particularly for recharging the motor vehicle battery.

The electrical generator system according to the invention is characterised in that it comprises, in combination:
an alternator with permanent-magnet excitation, having output rectifier means,
a hydraulic motor which is coupled to the shaft of the alternator and has electrically-operated means for regulating its rate,
a reservoir for a hydraulic fluid,
a rotary hydraulic pump which can be driven by the internal combustion engine of the motor vehicle in order to send a flow of fluid taken from the reservoir, to the hydraulic motor, through a delivery pipe,
a return pipe for returning the fluid from the hydraulic motor to the reservoir; and
an electronic control unit which is connected to the output of the alternator and to the regulator means associated with the hydraulic motor and is arranged to regulate the voltage delivered by the alternator in a predetermined manner, by modifying the rate of rotation of the hydraulic motor with the use of the regulator means.

The electrical generator system according to the invention enables the rate of rotation of the alternator rotor to be independent of the rate of rotation of the motor vehicle's internal combustion engine. Thus the conventional voltage-regulator circuit associated with the alternator can be dispensed with.

With the generator system according to the invention, the alternator can be installed in the compartment of the motor vehicle which houses the internal combustion engine, but not necessarily on the engine.

Further characteristics and advantages of the invention will become apparent from the following detailed description, given with reference to the appended drawing which is provided purely by way of non-limiting example and shows an electrical generator system according to the invention in the form of a diagram, partially in block form.

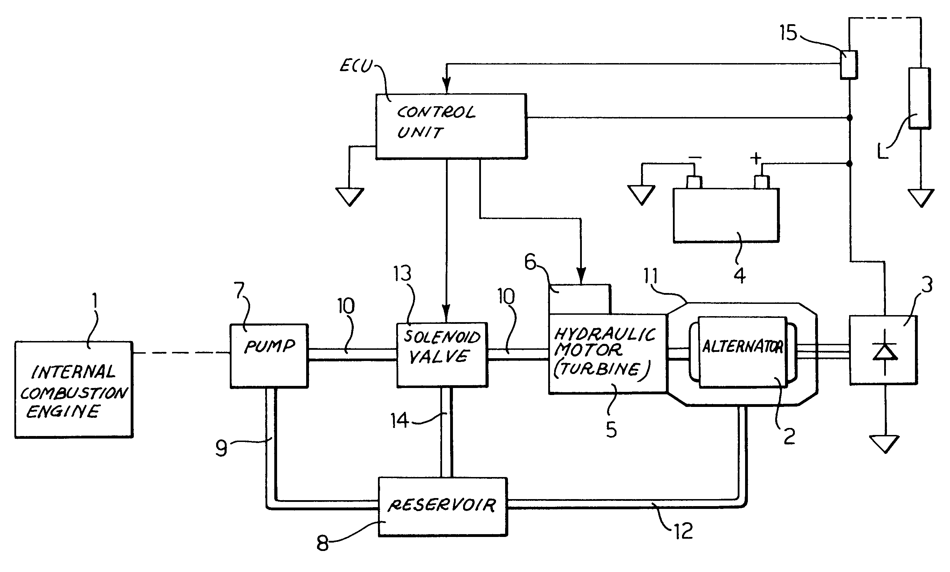

In Figure 1, the internal combustion engine of a motor vehicle is indicated 1.

An electrical generator system according to the invention is associated with the engine and includes an alternator 2 of the type with permanent-magnet excitation. An output rectifier circuit 3 connected between earth and the positive pole of the motor vehicle's battery, indicated 4, is associated with the alternator in conventional manner.

In the embodiment shown, the negative pole of the battery 4 is connected to earth.

A hydraulic motor 5 which, to advantage, consists of a hydraulic turbine 5, is associated with the alternator 2. In particular, the rotor of the turbine is coupled torsionally to the shaft of the alternator.

An electrically-operated regulator 6, associated with the turbine 5, can modify the rate of rotation of the turbine rotor.

A rotary hydraulic pump 7 is coupled to the internal combustion engine 1 and rotated thereby. In operation, the pump draws a flow of a hydraulic fluid from a reservoir 8 through a suction pipe 9, and sends it towards the turbine 5 through a delivery pipe 10. The hydraulic fluid output by the turbine 5 advantageously circulates inside a casing 11 in which the alternator 2 is enclosed, and then flows back towards the reservoir 8 through a return pipe 12.

A solenoid bypass valve 13 is interposed in the delivery pipe 10. The solenoid valve has an input connected to the delivery of the pump 7, a first output connected to the input of the turbine 5, and a second output connected to the reservoir by means of a by-pass pipe 14.

The solenoid valve 13 normally allows the hydraulic fluid to flow from the pump 7 to the turbine 5. When this solenoid valve receives a control signal from a control unit ECU, it cuts off the flow of the fluid towards the turbine 5, and connects the delivery of the pump 7 to the reservoir by means of the by-pass pipe 14.

The electronic control unit ECU is connected to the output of the rectifier circuit 3. It is also connected to a sensor device 15 which can provide it with an electrical signal indicative of the intensity of the overall current absorbed by the user devices L in the vehicle. The sensor device 15 may consist, for example, of a Hall-effect sensor, or a shunt resistor etc.

The control unit ECU is also connected to the control input of the regulator 6 associated with the turbine 5. The regulator may, for example, be a device which can modify the flow-rate of the fluid through the turbine.

Alternatively, if the turbine 5 is of the type with variable-pitch blades, the regulator 6 may be a device of a known type which can modify the pitch of the blades.

The hydraulic fluid circulated by the pump 7 may, for example, be the fluid used for cooling the internal combustion engine 1. In this case the reservoir 8 may be constituted by the sump of the engine 1.

In operation, the flow of fluid through the casing 11 effectively cools the alternator 2.

The electronic control unit ECU may be produced with the use of known electronic circuits and, in particular, may include a microprocessor.

The unit is arranged to regulate the voltage delivered by the alternator 2 by modifying the rate of rotation of the turbine 5 by means of the regulator 6.

In particular, the voltage delivered by the alternator-rectifier unit 2-3 can be regulated in dependence on the signal from the sensor 15 which, as already said, indicates the overall current absorbed by the user equipment in the motor vehicle.

The voltage delivered by the alternator is regulated independently of the rate of rotation of the shaft of the internal combustion engine 1.

If the rate of rotation of the engine exceeds a predetermined maximum value, the ECU unit can divert the flow of fluid from the delivery of the pump 7 to the reservoir 8, by causing the solenoid valve 13 to switch.

The system according to the invention enables the alternator to be installed in a position physically remote from the internal combustion engine 1. It also makes it unnecessary to use the traditional voltage-regulator circuits which are conventionally provided for regulating the voltage delivered by the alternator with variations in the rate of rotation of the internal combustion engine.

In the system according to the invention described above, the regulation can be effected by the choking of the turbine 5, or by the variation of the pitch of the turbine blades.

Naturally, the principle of the invention remaining the same, the forms of embodiment and details of construction may be varied widely with respect to those described and illustrated purely by way of non-limiting example, without thereby departing from the scope of the present invention.

In particular, the hydraulic motor 5 may be of another known type, not necessarily including a turbine.

## Claims

1. An electrical generator system for a motor vehicle with an internal combustion engine (1), particularly for recharging the battery (4) installed in the motor vehicle;
characterised in that it comprises, in combination: an alternator (2) with permanent-magnet excitation, having output rectifier means (3),
a hydraulic motor (5) which is coupled to the shaft of the alternator (2), for example a turbine (5), and having electrically-operated regulator means (6) for modifying its rate of rotation,
a reservoir (8) for a hydraulic fluid,
a rotary hydraulic pump (7) which can be driven by the internal combustion engine (1) of the motor vehicle in order to send a flow of fluid taken from the reservoir (8) to the hydraulic motor (5) through a delivery pipe (10),
a return pipe (12) for returning the fluid from the hydraulic motor (5) to the reservoir (8), and
an electronic control unit (ECU) which is connected to the output of the alternator (2) and to the regulator means (6) associated with the hydraulic motor (5), and is arranged to regulate the voltage delivered by the alternator (2) in a predetermined manner, by modifying the rate of rotation of the hydraulic motor (5) with the use of the regulator means (6).

2. An electrical generator system according to Claim 1, characterised in that it also includes sensor means (15) for providing the control unit (ECU) with an electrical signal indicative of the current absorbed in operation by user devices (L) installed in the motor vehicle, and in that the unit (ECU) is arranged to pilot the regulator means (6) associated with the hydraulic motor (5), in dependence on the output voltage of the alternator (2) and on the signal supplied by the sensor means (15).

3. An electrical generator system according to Claim 1 or Claim 2, characterised in that a solenoid bypass valve (13) interposed in the delivery pipe (10) has an input connected to the pump (7) and first and second outputs connected, respectively, to the hydraulic motor (5) and to the reservoir (8), and in that the unit (ECU) is connected to the solenoid valve (13) and can selectively cause the solenoid valve (13) to assume a first or a second condition, in which the solenoid valve (13) enables the fluid to flow from the pump (7) to the hydraulic motor (5), or from the pump (7) to the reservoir (8), respectively.

4. An electrical generator system according to any one of the preceding Claims, characterised in that the alternator (2) is associated with heat-exchange means (11) through which the fluid output by the hydraulic motor (5) flows, so that the fluid can cool the alternator (2) in operation.

5. An electrical generator system according to any one of the preceding Claims, in which the regulation means (6) can modify the flow-rate of the fluid through the hydraulic motor (5).

6. An electrical generator system according to any one of the preceding claims, characterised in that the alternator (2) and the hydraulic motor (5) are combined in a single one-piece unit.

7. An electrical generator system according to any one of the preceding claims, characterised in that the hydraulic motor includes a turbine (5).

8. An electrical generator system according to Claim 7, in which the turbine (5) is of the type with variable-pitch blades, and in which the regulator means (6) can modify the pitch of the blades.
